**Europäisches Patentamt**

**European Patent Office**

**Office européen des brevets**

(19)

(11) Veröffentlichungsnummer: **0 315 622 B1**

(12) # EUROPÄISCHE PATENTSCHRIFT

(45) Veröffentlichungstag der Patentschrift:
27.03.91 Patentblatt 91/13

(51) Int. Cl.$^5$: **F02B 77/13**, F02F 7/00,
F02B 61/06

(21) Anmeldenummer: 88890273.1

(22) Anmeldetag: 02.11.88

(54) **Verbindung der Kurbelwelle einer schalldicht gekapselten Brennkraftmaschine mit der koaxialen Antriebswelle der ausserhalb der Kapsel angeordneten, an einem Querträger befestigten Hilfseinrichtungen.**

(30) Priorität: 03.11.87 AT 2885/87

(43) Veröffentlichungstag der Anmeldung:
10.05.89 Patentblatt 89/19

(45) Bekanntmachung des Hinweises auf die
Patenterteilung:
27.03.91 Patentblatt 91/13

(84) Benannte Vertragsstaaten:
FR GB IT NL SE

(56) Entgegenhaltungen:
EP-A- 62 030
FR-A- 1 476 802
FR-A- 2 357 780
US-A- 3 543 538

(73) Patentinhaber: STEYR-DAIMLER-PUCH
AKTIENGESELLSCHAFT
Franz-Josefs-Kai 51
A-1010 Wien (AT)

(72) Erfinder: Valev, Assen, Dr. Ing.
Dr. Janetschekgasse 1/3/6
A-2380 Perchtoldsdorf (AT)

## Beschreibung

Die Erfindung bezieht sich auf eine Verbindung der Kurbelwelle einer schalldicht gekapselten Brennkraftmaschine mit der koaxialen Antriebswelle der außerhalb der Kapsel angeordneten, an einem Querträger befestigten Hilfseinrichtungen, wie Lichtmaschine, Wasserpumpe, Lüfter u.dgl., wobei zwischen der Kurbelwelle und der Antriebswelle eine körperschallisolierende Kupplung vorgesehen ist, die aus einem elastischen Ring besteht, den achsparallele, wechselweise an der Kurbelwelle und der Antriebswelle befestigte Schrauben in Distanzkörpern durchsetzen, und wobei die Antriebswelle in einem mit dem Querträger fest verbundenen Schild gelagert und die Brennkraftmaschine am Querträger über ein ringförmiges, körperschalldämmendes Element abgestützt ist.

Eine solche Verbindung ist bereits bekannt (EP-P1 0 062 030). Dabei ist der elastische Ring der Kupplung lediglich durch die achsparallelen Schrauben wechselseitig an der Kurbelwelle und an der Antriebswelle der Hilfseinrichtungen gehalten und hat sowohl innen- als auch außenseitig Radialspiel. Das ringförmige, körperschalldämmende Element zur Abstützung der Brennkraftmaschine am Querträger weist eine beträchtliche Stäke auf. Es hat sich nun gezeigt, daß durch diese Art der Verbindung am elastischen Ring der Kupplung unzulässig große Radialausschläge auftreten, die eine frühzeitige Zerstörung dieses Ringes mit sich bringen. Um die Radialausschläge zu verringern, ist man in der Praxis dazu übergegangen, die Dicke des körperschallisolierenden, ringförmigen Elementes beträchtlich zu verringern, wodurch dann aber die Dämmung der Körperschallübertragung von der Brennkraftmaschine auf den Querträger und mit ihm auch auf das Schild wesentlich beeinträchtigt wird. Außerdem konnten die Radialausschläge des elastischen Ringes nicht voll auf ein zulässiges Maß vermindert werder.

Somit liegt der Erfindung die Aufgabe zugrunde, diese Mängel zu beseitigen und die eingangs geschilderte Verbindung so zu verbessern, daß die Radialausschläge des elastischen Ringes der Kupplung auf das zulässige Maß herabgesetzt werden, ohne die Dicke des ringförmigen, körperschalldämmenden Elementes herabsetzen und damit eine größere Körperschallübertragung auf den Querträger in Kauf nehmen zu müssen.

Die Erfindung löst die gestellte Aufgabe dadurch, daß der elastische Ring zwischen zwei Platten gehalten ist, von denen die eine mittels der zugehörigen Schrauben mit der Kurbelwelle und die andere über die anderen Schrauben mit der Antriebswelle jeweils starr verbunden ist, und daß sich wenigstens eine der Platten in einen in dem elastischen Ring eingepreßten koaxialen Zylinder fortsetzt.

Durch die beiden Platten ergibt sich eine bessere Einspannung der wechselseitig wirkenden Schrauben. Wesentlich ist aber der in dem elastischen Ring eingepreßte koaxiale Zylinder, der radiale Ausschläge des elastischen Ringes weitgehend verhindert, so daß das ringförmige, körperschalldämmende Element diesbezüglich in seiner bemessung nicht mehr eingeschränkt zu werden braucht. Es muß sich nicht unbedingt um einen Zylinder handeln, es wäre vielmehr auch eine prismatische Form des in dem elastischen Ring eingepreßten Körpers denkbar, jedoch ist der Zylinder aus Fertigungsgründen weitgehend vorzuziehen. Anstelle eines von nur einer Platte in den Ring einragenden Zylinders könnte auch an jeder Platte ein solcher Fortsatz vorhanden sein, der dann etwa bis zur Hälfte der Breite des elastischen Ringes reicht.

In der Regel wird ein gewisses zulässiges Maß radialer Ausschläge des elastischen Ringes notwendig sein. Ist dies der Fall, so ist der koaxiale Zylinder gegenüber dem elastischen Ring im Bereich jener Schrauben, die in der Gegenplatte zu der den Zylinder aufweisenden Platte starr gehalten sind, freigestellt.

In der Zeichnung ist der Erfindungsgegenstand in einem Ausführungsbeispiel dargestellt, und zwar zeigen.

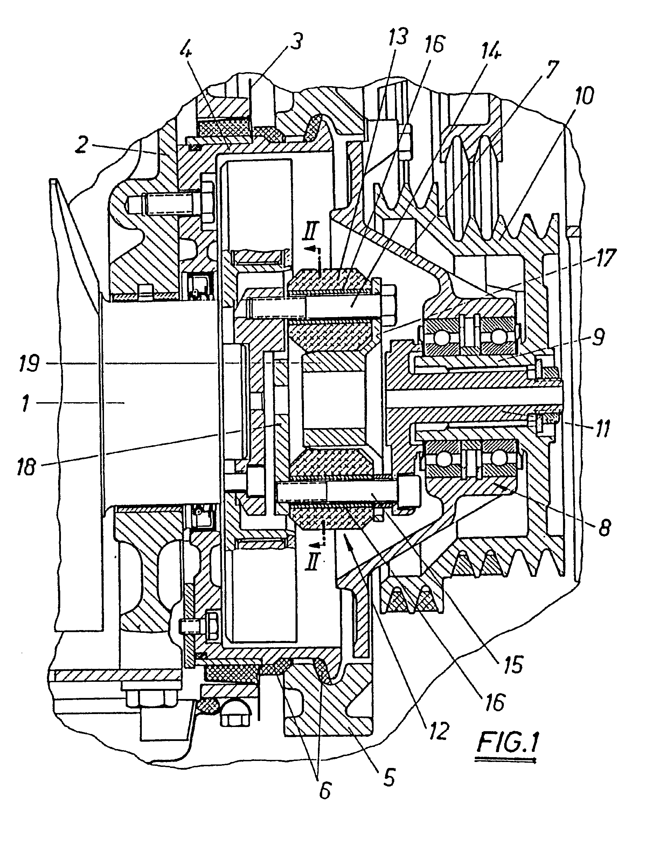

Fig. 1 eine Verbindung der Kurbelwelle mit der Koaxialen Antriebswelle der Hilfseinrichtungen im Axialschnitt und

Fig. 2 einen zugehörigen Querschnitt nach der Linie II-II der Fig. 1.

Von der Brennkraftmaschine ist nur ein Teil der Kurbelwelle 1 und des Triebwerksblockes 2 dargestellt, wobei die ganze Brennkraftmaschine mit einer schalldichten Kapsel 3 versehen ist. Der Triebwerksblock 2 stützt sich über eine mit ihm starr verbundene Trommel 4 an einem Querträger 5 ab, wobei zwischen dem Querträger 5 und der Trommel 4 ein ringförmiges, körperschalldämmeldes Element 6 eingesetzt ist. Am Querträger 5 ist ein zur Kurbelwelle 1 koaxialer, zur Abdeckung dienender Schild 7 angeschraubt, der mit einer Lagerung 8 für die Welle 9 der Antriebsscheibe 10 für die nicht dargestellten Hilfseinrichtungen versehen ist. Die Welle 9 bzw. der mit ihr drehfest verbundene Wellenteil 11 ist mit der Kurbelwelle 1 über eine elastische, körperschallisolierende Kupplung 12 verbunden. Diese Kupplung 12 besteht aus einem elastischen Ring 13, den wechselweise an der Kurbelwelle 1 bzw. der Antriebswelle 9, 11 befestigte Schrauben 14, 15 durchsetzen.

Dabei sind die Schrauben 14 mit der Kurbelwelle 1 und die Schrauben 15 mit der Antriebswelle 9, 11 fest verbunden und von Distanzhülsen 16 umschlossen.

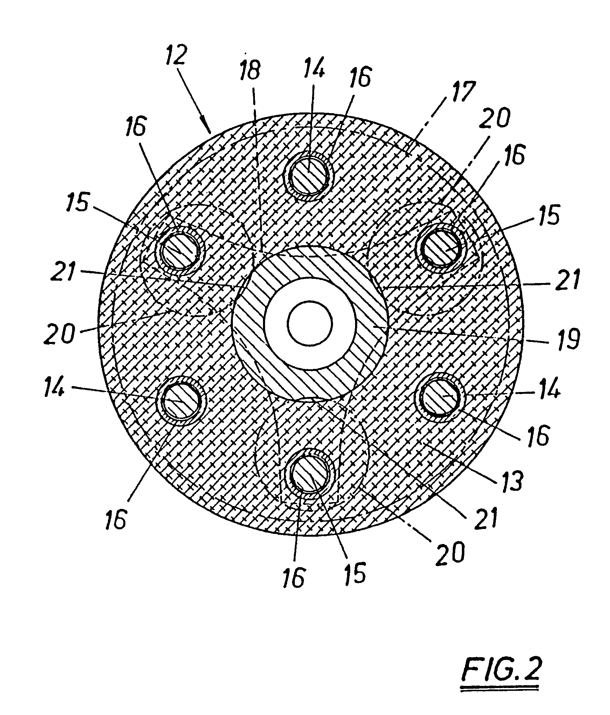

Der elastische Ring ist zwischen zwei Platten 17, 18 gehalten, von denen die Platte 17 über die Schrauben 14 mit der Kurbelwelle 1 und die Platte 18 über die Schrauben 15 mit der Antriebswelle 9, 11 starr verbunden ist. Die Platte 17 setzt sich in einen koaxialen Zylinder 19 fort, der im elastischen Ring 13 eingepreßt ist. Selbstverständlich hat die Platte 17 für die Schrauben 15 entsprechende zylindrische Freistellungen 20 (Fig. 2), wogegen die Platte 18 überhaupt nur dreiarmig ausgebildet ist. Aus Fig. 2 ist auch ersichtlich, daß der Zylinder 19 im Bereich der Schrauben 15 Freistellungen 21 aufweist.

## Ansprüche

1. Verbindung der Kurbelwelle (1) einer schalldicht gekapselten Brennkraftmaschine (2) mit der koaxialen Antriebswelle (9, 11) der außerhalb der Kapsel (3) angeordneten, an einem Querträger (5) befestigten Hilfseinrichtungen, wie Lichtmaschine, Wasserpumpe, Lüfter u.dgl., wobei zwischen der Kurbelwelle und der Antriebswelle (9, 11) eine körperschallisolienrende Kupplung (12) vorgesehen ist, die aus einem elastichen Ring (13) besteht, den achsparallele, wechselweise an der Kurbelwelle (1) und der Antriebswelle (9, 11) befestigte Schrauben (14, 15) in Distanzkörpern (16) durchsetzen, und wobei die Antriebswelle (9, 11), in einem mit dem Querträger (5) fest verbundenen Schild (1) gelagert und die Brennkraftmaschine (2) am Querträger (5) über ein ringförmiges, körperschalldämmendes Element (6) abgestützt ist, dadurch gekennzeichnet, daß der elastische Ring (13) zwischen zwei Platten (17, 18) gehalten ist, von denen die eine (17) mittels der zugehörigen Schrauben (14) mit der kurbelwelle (1) und die andere (18) über die anderen Schrauben (15) mit der Antriebswelle (9, 11) jeweils starr verbunden ist, und daß sich wenigstens eine (17) der Platten (17, 18) in einen in den elastischen Ring (13) eingepreßten koaxialen Zylinder (19) fortsetzt.

2. Verbindung nach Anspruch 1, dadurch gekennzeichnet, daß der koaxiale Zylinder (19) gegenüber dem elastischen Ring (13) im Bereich jener Schrauben (15), die in der Gegenplatte (18) zu der den Zylinder (19) aufweisenden Platte (17) starr gehalten sind, freigestellt ist.

## Claims

1. Means connecting the crankshaft (1) of a sound-tightly enclosed internal combustion engine (2) to the coaxial drive shaft (9, 11) of auxiliary means, such as the generator, water pump, fan and the like, which are disposed outside the enclosure (3) and secured to a cross-beam (5), wherein a coupling (12) for insulating structure-borne sound is provided between the crankshaft and the drive shaft (9, 11) and consists of an elastic ring (13), through which axially parallel screws (14, 15), which are secured in alternation to the crankshaft (1) and to the drive shaft (9, 11), extend in spacer members (16), the drive shaft (9, 11) is movably mounted in a shield (7), which is fixedly connected to the cross-beam (5), and the internal combustion engine (2) is supported on the cross-beam (5) by means of an annular element (6), which insulates structure-borne sound, characterized in that the elastic ring (13) is held between two plates (17, 18), one (17) of which is rigidly connected by the associated screws (14) to the crankshaft (1) whereas the other (18) is rigidly connected by the other screws (15) to the drive shaft (9, 11), and at least one (17) of the plates (17, 18) is continued by a coaxial cylinder (19), which has been force-fitted into the elastic ring (13).

2. Connecting means according to claim 1, characterized in that the coaxial cylinder (19) is clear of the elastic ring (13) adjacent to those screws (15) which are rigidly held in that plate (18) which is opposite to the plate (17) provided with the cylinder (19).

## Revendications

1. Accouplement entre le vilebrequin (1) d'un moteur à combustion interne (2) encapsuléinsonorisé, et l'arbre de transmission coaxial (9, 11), de dispositifs auxiliaires extérieurs à l'enveloppe d'encapsulation (3) montés sur une poutre transversale (5) comme une génératrice d'éclairage, une pompe à eau, un ventilateur, etc.., dans lequel il est prévu entre le vilebrequin et l'arbre de transmission (9, 11) un accouplement (12) insonorisant contre la conduction des bruits qui comprend un anneau élastique (13) que traversent des vis (14, 15) parallèles à l'axe fixées alternativement au vilebrequin (1) et à l'arbre de transmission (9, 11) dans des éléments intercalaires (16), et dans lequel l'arbre de transmission (9, 11) est guidé dans un carter (7) relié rigidement à la poutre transversale (5), cependant que le moteur à combustion interne (2) s'appuie sur la poutre transversale (5) par l'intermédiaire d'un élément annulaire (6) amortissant les bruits de conduction caractérisé en ce que l'anneau élastique (13) est tenu entre deux plaques (17, 18) dont l'une (17) est reliée rigidement au vilebrequin (1) au moyen de vis (14) correspondantes et l'autre (18) par les autres vis (15) à l'arbre de transmission (9, 11), et en ce qu'au moins l'une (17) des plaques (17, 18) se prolonge en un cylindre (19) coaxial emmanché dans l'anneau élastique (13).

2. Accouplement selon la revendication 1, caractérisé en ce que le cylindre coaxial (19) est laissé libre vis à vis de l'anneau élastique (13) dans la région de chacune des vis (15) qui sont tenues rigidement dans la contre-plaque (18) opposée à la plaque (17) comportant le cylindre (19).

_FIG.1_

4

FIG.2